# EUROPEAN PATENT APPLICATION

(11) **EP 2 615 872 A1**
(43) Date of publication of application: **17.07.2013**
(21) Application number: 13150832.7
(22) Date of filing: 10.01.2013
(51) Int. Cl.: H04W 52/36, H04B 17/00

(54) **System and method for controlling power levels based on host identification**

(30) Priority: 10.01.2012 US 201213347422
(71) Applicant: Novatel Wireless, Inc, San Diego, CA 92121 (US)
(72) Inventor: Lockerbie, Ian, Calgary, Alberta T2E 1E9 (CA)
(74) Representative: Winter, Brandl, Fürniss, Hübner, Röss, Kaiser, Polte - Partnerschaft

(57) **Abstract**

Systems and methods are provided for controlling radio frequency (RF) levels in wireless communications devices, such as embedded modems, while optimizing performance of the wireless communications devices. Controlling RF levels is achieved by adjusting transmitted power levels of an embedded modem based upon a type or model of host device that the embedded modem is operatively connected to. By tailoring output power levels to specific host devices, regulations related to limiting RF exposure, such as specific absorption rate (SAR) or maximum permissible exposure (MPE) limits, may be met without unduly affecting performance of the wireless communications devices.

## Description

### TECHNICAL FIELD

The present invention relates generally to wireless communication devices and, more particularly, to systems and methods for controlling power levels for such wireless communication devices.

### BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Portable/wireless communication devices commonly transmit radio frequency (RF) signals through an antenna. Such communication devices may be used in a variety of manners and in a variety of conditions. Government regulations often require such devices to satisfy certain criteria associated with exposure.

In particular, the Federal Communications Commission (FCC) has expressed growing concern about external antennas and their Specific Absorption Rate (SAR) effects. Thus, the FCC has adopted limits for safe exposure to radiofrequency (RF) energy given in terms of SAR units, a measure of the amount of RF energy absorbed by the body when using a device, such as a mobile phone. For example, the FCC requires mobile phone manufacturers to ensure that their phones comply with these objective limits for safe exposure by operating at or below the desired SAR levels. The FCC has also set forth rules concerning SAR levels of devices that may utilize antennas, such as host devices that employ embedded modems. Even when body tissue can be moved further away from a radiating source, regulatory requirements still exist when exposure may occur at distances of over 20cm from body tissue, i.e., maximum permissible exposure (MPE) limits. In order to comply with regulations of government agencies, such as the FCC, communication devices must be tested to ensure that the SAR levels from such devices are within acceptable levels.

More recently, the FCC has changed the way that SAR effects are measured with respect to USB stick/dongle communications devices that emit RF energy, such as USB modems with configurations that include, but are not limited to, straight USB sticks, swivel USB sticks, fixed angular USB sticks, etc. In particular, and until recently, the FCC required devices to be tested at a separation of 1.5 cm between the device and a phantom simulating human body tissue. Recently, the FCC has required that the separation distance in such tests be reduced to 0.5 cm. Oftentimes, tradeoffs are made between complying with such regulations and aesthetic and performance considerations. However, such design and performance tradeoffs may not be possible in other devices, such as original equipment manufacturer (OEM) embedded modem/module devices. Thus, it may be desirable to have the ability to adjust the power level of an RF signal source.

### SUMMARY

Various aspects of examples of the invention are set out in the claims.

According to a first aspect, a method of automatically configuring a modem comprises integrating a modem into a host device. The method further comprises determining an identity of the host device, and adjusting a maximum output power level of the modem based on the identity of the host device.

According to a second aspect, a computer-readable memory includes computer executable instructions, the computer executable instructions, which when executed by a processor, cause an apparatus to: integrate a modem into a host device; determine an identity of the host device; and adjust a maximum output power level of the modem based on the identity of the host device. According to a third aspect, an apparatus comprises at least one processor and at least one memory. The at least one memory includes computer program code, the at least one memory and the computer program code configured to, with the at least one processor, cause the apparatus to perform at least the following: integrate a modem into a host device; determine an identity of the host device; and adjust a maximum output power level of the modem based on the identity of the host device.

According to another aspect, the pre-determined maximum output power level for the host device may comprise one of a plurality of pre-determined maximum output power levels for a plurality of pre-tested host devices.

Furthermore, the plurality of pre-determined maximum output power levels may be one of stored on the modem prior to the integrating of the modem into the host device and downloaded to the modem upon the integrating of the modem into the host device.

Furthermore, the identity of the host device may be determined via the modem sensing at least one hardware element resident in the host device characterizing the host device.

Furthermore, the at least one hardware element may comprise at least one of an ID resistor located in the host device and a power supply of the host device.

Furthermore, the identity of the host device may be determined via the host device determining a distinguishing characteristic of at least one hardware or software element of the host device.

Furthermore, the at least one hardware element may comprise a motherboard a processor, a graphics card, and at least one hard drive, and /or
the at least one software element comprises basic input-output system (BIOS) information and serial number information.

Furthermore, the integrating may comprise at least one of an initial boot up process and a power up sequence.

The method may furhter comprise, prior to the integrating of the modem into the host device, setting a universally safe, default maximum output power level.

The method may further comprisine, maintaining the default maximum output power level if determining the identity of the host device is unsuccessful.

According to another aspaect of the invention the apparatus may be adapted to perform the adjusting of the maximum output power level, the at least one memory and the computer program code may be configured to, with the at least one processor, cause the apparatus to match the determined identity of the host device with a pre-determined maximum output power level appropriate for the host device.

Furthermore, the apparatus may be adapted such that the pre-determined maximum output power level for the host device comprises one of a plurality of pre-determined maximum output power levels for a plurality of pre-tested host devices.

Furthermore, the apparatus may be adapted such that the plurality of pre-determined maximum output power levels is one of stored on the modem prior to the integrating of the modem into the host device and downloaded to the modem upon the integrating of the modem into the host device.

Furthermore, the apparatus may be adapted to perform the determining of the identity of the host device, the at least one memory and the computer program code is configured to, with the at least one processor, cause the apparatus to sense at least one hardware element resident in the host device characterizing the host device.

Furtheremore, the apparatus may be adapted such that the at least one hardware element comprises at least one of an ID resistor located in the host device and a power supply of the host device.

Furthermore, the apparatus may be adapted such that the identity of the host device is determined via the host device determining a distinguishing characteristic of at least one hardware or software element of the host device.

Furthremore, the apparatus may be adapted such that the at least one hardware element comprises a motherboard a processor, a graphics card, and at least one hard drive.

Furthermore, the apparatus may be adapted such that the at least one software element comprises basic input-output system (BIOS) information and serial number information.

Furthermore, the apparatus may be adapted to perform the integrating, the at least one memory and the computer program code is configured to, with the at least one processor, cause the apparatus to perform at least one of an initial boot up process and a power up sequence.

Furthermore, the apparatus may comprisine, prior to the integrating of the modem into the host device, a universally safe, default maximum output power level is set for the apparatus.

Furthermore, the apparatus may be adapted such that the at least one memory and the computer program code is further configured to, with the at least one processor, cause the apparatus to maintain the default maximum output power level if determining the identity of the host device is unsuccessful.

### RIEF DESCRIPTION OF THE DRAWINGS

For a more complete understanding of example embodiments, reference is now made to the following descriptions taken in connection with the accompanying drawings in which:
Figure 1 illustrates an exemplary wireless communications device operatively connected to a host device;
Figure 2 is a flow chart illustrating exemplary processes performed in accordance with various embodiments to automatically configure maximum output power levels in the wireless communications device of Figure 1 ;

### DETAILED DESCRIPTON OF THE DRAWINGS

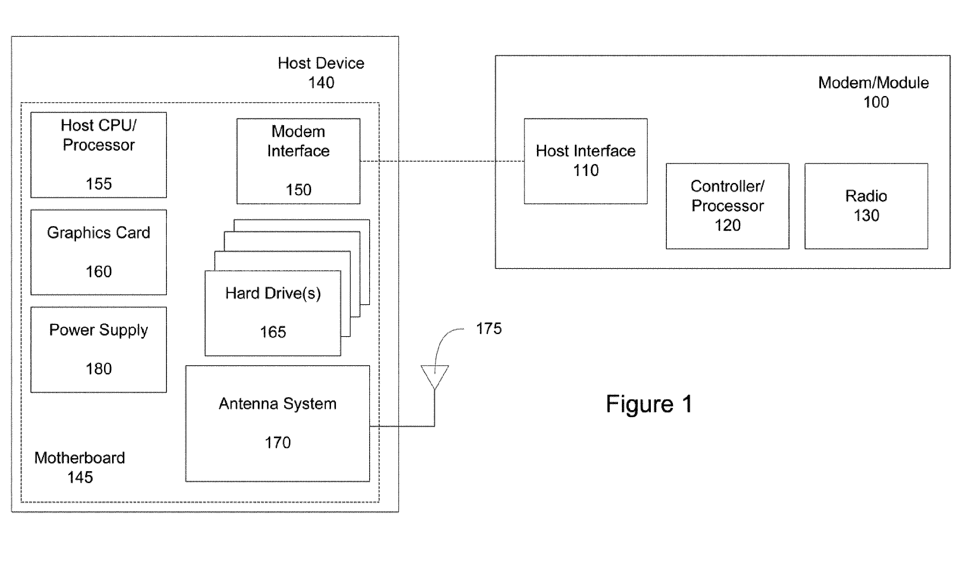

Example embodiments and their potential advantages are understood by referring to Figures 1-2 of the drawings.

As discussed above, tradeoffs are often made regarding design and performance considerations of a wireless communications device, such as an embedded modem/module, in order to comply with SAR regulations. Once such performance tradeoff is output/radiated power. That is, complying with SAR regulations can lead to limits being placed on a maximum power output of a module. Limiting the output power of a module can lead to a reduction in the radiated power of the module, which in turn, can lead to less than optimal performance. For example, lowering the output power may ultimately result in lower data rates and/or dropped connections. Despite such drawbacks, power reduction is a preferred method of complying with SAR regulations as antenna/antenna system redesign at a host device can be costly and/or difficult.

Another tradeoff may result in the case of USB modems, where the USB modem housing is altered (whether in material, size, design, etc.) to increase the distance between a user operating a USB modem and one or more antennas of the USB modem. In certain cases, complying with SAR regulations may require, in accordance with conventional methods, altering physical aspects of a USB modem to increase the distance between a user and a radiating antenna, as well as reducing output power. However, altering physical aspects of an embedded modem is not likely possible, as embedded modems must be capable of being inserted in areas with "set" dimensions, such as Universal Subscriber Identity Module (USIM) card slots or PC card slots, etc. Also, technology specifications, such as the 3^{rd} Generation Partnership Project (3GPP) conducted power requirements, manufacturer Total Radiated Power (TRP) requirements, etc., may only provide a narrow margin by which power output can be reduced.

Moreover, embedded modems may be connected to many different kinds and models of host devices, such as laptop computers. Because of the differing characteristics that these different host devices possess, the amount by which the power output of the embedded modem is reduced is likely not appropriate for every host device. Thus, reducing the output power of an embedded modem for a "problem" host device may led to a "lowest common denominator" effect, where a worst case scenario is accounted for even though another host device may allow for greater output power than the problem host device.

Further still, configuring embedded modems for different host devices may result in an inappropriately-configured embedded modem being connected to a particular host device resulting in a SAR level violation. Some manufacturers of embedded modems currently calibrate output power of their modems to a single, fixed output power for all customers. However, even if modem manufacturers were to "customize" output power of their embedded modems, manufacturers would still likely incur increased cost/production times to specifically configure their embedded modems with particular output levels to match particular host devices, which runs contrary to a common goal of end user, i.e., technology simplification. That is, users may be turned off and/or confused by the need to utilize a particular embedded modem for each particular host device that a user employs.

As described previously, SAR levels are dependent upon output power of a device, e.g., an embedded modem, the antenna system of the host device (in the case of embedded modems/modules), and a user's distance from that antenna system. Accordingly, various embodiments of the present invention are directed to controlling RF exposure from wireless communications devices by adjusting transmitted power levels of an embedded modem based upon a type or model of host device that the embedded modem is operatively connected to. Figure 1 illustrates an exemplary embedded modem/module 100 having a host interface 110, a controller/processor 120, and a radio 130. The host interface 110 allows operative connection of the embedded modem 100 to a host device 140, which may be, e.g., a laptop computer, a portable digital assistant, table PC, etc. The processor 120 controls operation of the embedded modem 100, and the radio 130 performs wireless transmission and receipt of data. It should be noted that other elements/modules may be present in the embedded modem 100, including, but not limited to, e.g., a memory unit (not shown).

The host device 140 may include a motherboard 145 upon which various host device elements/modules are implemented/located. For example, the host device 140 may further comprise a modem interface 150 allowing operative connection to the embedded modem 100, which as discussed above, may be a USIM card interface, a PC Card interface, etc. The host device 140 may further include a CPU/processor 155, a graphics card 160, one or more hard drives 165, one or more antenna systems 170 that include at least one antenna 175, and a power supply 180. The power supply 180 is utilized not only to power the host device 140, but may also be used to power the modem 100. Additionally, the wireless transmit/receive functionality of the radio 130 of the may be realized through the antenna system 170 of the host device 140. In accordance with one embodiment, the maximum power level of a modem radio, such as radio 130 of Figure 1, is set or configured upon being powered up in a host device, as opposed to being set/configured during the manufacturing stage, e.g., at a modem factory. Either the modem or the host device itself can identify the type or model of the host device that is operatively connected to the modem. Accordingly, the maximum output power levels that the modem radio will be allowed to transmit are configured for that identified host device.

To achieve this on-the-fly configuration of the modem radio, information regarding maximum power levels is determined in advance. That is, testing can be performed on the various known host devices prior to manufacturing or distribution of the embedded modems to determine output power limits. For example, a prototype or test embedded modem/module may be connected to different host devices, and the maximum output power levels that may be transmitted can be determined for each of the different host devices. This information may then be stored on embedded modems in, e.g., a memory unit. In the case of modems that incorporate flash memory units, the information could also be stored on flash memory providing further diversity or a method of easy "updating" of maximum power levels for, e.g., new host devices. Alternatively, this information could be stored on the various host devices, for example, as part of modem installation software, modem drivers, etc. Using the latter alternative, the maximum output power levels information may be downloaded to the modem after the modem has been powered upon in the host device.

Hence, when a modem is powered up in a host device, the type or model of host device can be recognized, and the allowable maximum output power level is set for the modem radio based on this information. If by some chance, the modem is powered up in an "unknown" host device or if the host device is unrecognizable for some reason, the modem radio can be set to operate at a default maximum power level. This default maximum power level may be low or lower than would be utilized in conjunction with known host devices (and is considered safe for all host devices). It should be noted that an embedded modem may initially be set at this default maximum power level from the factory or for distribution. As a result, in known host devices, more output power may be allowed to provide optimum performance given output power considerations, such as SAR/MPE regulations.

For example, a laptop PC vendor may ship a standard embedded modem in the form of a mini-card module with each host platform, where each of the host platforms is pre-validated using an OEM mini-card module. The laptop PC vendor would include standard installation software capable of auto-configuring the mini-card module maximum power levels (which may be equal to or less than the absolute capabilities of the module). As shipped, the mini-card module would be configured with a default maximum output power level that is considered safe in all host devices. After the in-host auto-configuration process is completed, the maximum output power level of the mini-card module would be set specific to the particular host device in which it was auto-configured. Ideally, this auto-configuration process would occur each time the mini-card module is booted up/powered on, but if desired, the auto-configuration process may be limited to the initial boot up/power on, or any other number of preferred instances/events. For example, occurrence of the auto-configuration process may be triggered only if a new host device is detected, e.g., the mini-card module detects new ID resistors, a new motherboard, etc., as described previously. Alternatively still, modem configuration can be performed at the laptop PC vendor factory/site, when the mini-card module is integrated into a host device.

As alluded to previously, either the embedded modem or the host device itself may identify the host device type or model that the embedded modem is operatively connected to. The host device may identify itself by identifying one or more of its motherboard, CPU, graphics card, hard drive ID(s), BIOS information, serial number information, or any other hardware/software aspect that can provide its "identity" in terms of type, model, etc. For example, software or some resident functionality on the host device may be capable of accessing a master boot record of a hard disk, accessing serial presence detect data, or the vendor/model/revision information of a motherboard, the BIOS model/date information, etc.

In the case of an embedded modem identifying a host device, ID resistors may be incorporated into the antenna system, e.g., antenna system 170 of Figure 1. Such ID resistors can be sensed or detected by an embedded modem and a host device type or model corresponding to the detected ID resistors can be determined by, e.g., a lookup table, or similar mechanism. Additionally, an embedded modem may be able to identify a host device type or model by characterizing it via the power supply, such as power supply 180 of Figure 1 that powers the modem 100, and consequently, the radio 130. If the embedded modem is a land grid array (LGA) type modem, ID resistors may be mounted on the host device that the embedded modem can sense or detect. Upon detecting the ID resistors, they can be matched to a corresponding host device type, model, brand, etc. Again, it should be noted that the above-described methods of identification are not intended to be limiting, and that various embodiments of the present invention contemplate other mechanisms for identification as long as they are capable of distinguishing between different host devices.

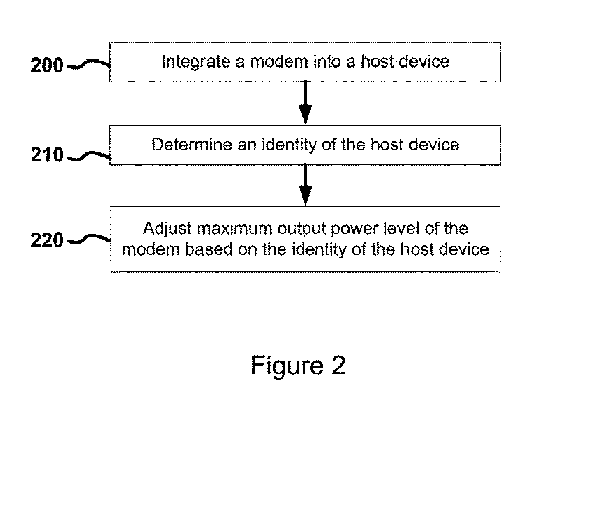

Figure 2 illustrates exemplary processes performed in accordance with various embodiments of the present invention for automatically configuring a modem. At 200, a modem, such as an embedded modem, is integrated (e.g., booted up or otherwise initialized) into a host device. At 210, the identity of the host device is determined. For example, and as previously described, the identity of the host device may be its model, type, brand, etc. Moreover, and as also described previously, the determination of the host device identity may be performed by either the host device itself or the modem. At 220, the maximum output power level of the modem is adjusted based upon the determined identity of the host device. For example, output power level of the modem may be preset to a default level that is safe for all host devices. Upon adjusting the maximum output power level, the modem becomes optimized for use with the host device in which it was booted up.

Embedded modems/modules configured in accordance with various embodiments described herein result in better use experiences due to output power levels being as high as possible for a given host device, avoiding lowest common denominator problems. Additionally, issues involving host device certification (e.g., meeting SAR regulations) may be lessened or avoided altogether due to the flexible output power levels that can be configured based on the host device. Additionally, and ultimately, user safety concerns are, at the very least, lessened, even in cases where a modem is swapped between more than one host device, a host device or the modem is repaired or otherwise altered, etc. In any case, the output power level of the modem will be correctly set for a known host device or set at a safe default level.

Various embodiments of the present invention may be implemented in a system having multiple communication devices that can communicate through one or more networks. The system may comprise any combination of wired or wireless networks such as a mobile telephone network, a wireless Local Area Network (LAN), a Bluetooth personal area network, an Ethernet LAN, a wide area network, the Internet, etc.

Communication devices may include a mobile telephone, a personal digital assistant (PDA), a notebook computer, etc. The communication devices may be located in a mode of transportation such as an automobile.

The communication devices may communicate using various transmission technologies such as Code Division Multiple Access (CDMA), Global System for Mobile Communications (GSM), Universal Mobile Telecommunications System (UMTS), Time Division Multiple Access (TDMA), Frequency Division Multiple Access (FDMA), Transmission Control Protocol/Internet Protocol (TCP/IP), Short Messaging Service (SMS), Multimedia Messaging Service (MMS), e-mail, Instant Messaging Service (IMS), Bluetooth, IEEE 802.11, etc.

An electronic device in accordance with embodiments of the present invention may include a display, a keypad for input, a microphone, an ear-piece, a battery, and an antenna. The device may further include radio interface circuitry, codec circuitry, a controller/CPU/processor and a memory.

Various embodiments described herein are described in the general context of method steps or processes, which may be implemented in one embodiment by a software program product or component, embodied in a machine-readable medium, including executable instructions, such as program code, executed by entities in networked environments. Generally, program modules may include routines, programs, objects, components, data structures, etc. that perform particular tasks or implement particular abstract data types. Executable instructions, associated data structures, and program modules represent examples of program code for executing steps of the methods disclosed herein. The particular sequence of such executable instructions or associated data structures represents examples of corresponding acts for implementing the functions described in such steps or processes.

Software implementations of various embodiments of the present invention can be accomplished with standard programming techniques with rule-based logic and other logic to accomplish various database searching steps or processes, correlation steps or processes, comparison steps or processes and decision steps or processes.

The foregoing description of various embodiments have been presented for purposes of illustration and description. The foregoing description is not intended to be exhaustive or to limit embodiments of the present invention to the precise form disclosed, and modifications and variations are possible in light of the above teachings or may be acquired from practice of various embodiments of the present invention. The embodiments discussed herein were chosen and described in order to explain the principles and the nature of various embodiments of the present invention and its practical application to enable one skilled in the art to utilize the present invention in various embodiments and with various modifications as are suited to the particular use contemplated. The features of the embodiments described herein may be combined in all possible combinations of methods, apparatus, modules, systems, and computer program products.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. A method of automatically configuring a modem, comprising:
integrating a modem into a host device;
determining an identity of the host device; and
adjusting a maximum output power level of the modem based on the identity of the host device.

2. The method of claim 1, wherein the adjusting of the maximum output power level comprises matching the determined identity of the host device with a pre-determined maximum output power level appropriate for the host device.

3. The method of claim 2, wherein the pre-determined maximum output power level for the host device comprises one of a plurality of pre-determined maximum output power levels for a plurality of pre-tested host devices.

4. The method of claim 3, wherein the plurality of pre-determined maximum output power levels is one of stored on the modem prior to the integrating of the modem into the host device and downloaded to the modem upon the integrating of the modem into the host device.

5. The method of claim 1, wherein the identity of the host device is determined via the modem sensing at least one hardware element resident in the host device characterizing the host device.

6. The method of claim 5, wherein the at least one hardware element comprises at least one of an ID resistor located in the host device and a power supply of the host device.

7. The method of claim 1, wherein the identity of the host device is determined via the host device determining a distinguishing characteristic of at least one hardware or software element of the host device.

8. The method of claim 7, wherein the at least one hardware element comprises a motherboard a processor, a graphics card, and at least one hard drive.

9. The method of claim 7, wherein the at least one software element comprises basic input-output system (BIOS) information and serial number information.

10. The method of claim 1, wherein the integrating comprises at least one of an initial boot up process and a power up sequence.

11. The method of claim 1 further comprising, prior to the integrating of the modem into the host device, setting a universally safe, default maximum output power level.

12. The method of claim 11 further comprising, maintaining the default maximum output power level if determining the identity of the host device is unsuccessful.

13. A computer-readable memory including computer executable instructions, the computer executable instructions, which when executed by a processor, cause an apparatus to perform a method as claimed in one of claims 1 to 12.

14. An apparatus, comprising:
at least one processor; and
at least one memory including computer program code, the at least one memory and the computer program code configured to, with the at least one processor, cause the apparatus to perform a method comprising the method steps according to one of the patent claims 1 to 12.
